# EUROPEAN PATENT APPLICATION

(11) **EP 4 723 336 A1**
(43) Date of publication of application: **08.04.2026**
(21) Application number: 24813903.2
(22) Date of filing: 08.04.2024
(51) Int. Cl.: H01M 50/258, H01M 50/244, H01M 50/209

(54) **SPACE-SAVING BATTERY BOX AND SYSTEM**

(30) Priority: 31.05.2023 CN 202310637266
(71) Applicant: Jiangsu Advanced Construction Machinery Innovation Center Ltd., Xuzhou, Jiangsu 221004 (CN)
(72) Inventor: WANG, Shuai, Xuzhou, Jiangsu 221004 (CN); SHAO, Xingguo, Xuzhou, Jiangsu 221004 (CN); XIAO, Penghui, Xuzhou, Jiangsu 221004 (CN)
(74) Representative: Proi World Intellectual Property GmbH
(86) International application number: PCT/CN2024/086495
(87) International publication number: WO 2024/244697

(57) **Abstract**

The present invention relates to the technical field of power batteries, and particularly relates to a space-saving battery box and system. The battery box comprises a battery case, a liquid cooling interface, a high-voltage connector, a battery module, a busbar, and a quick-connection liquid cooling pipe; the battery module is located in the battery case; the battery module comprises a battery cell stack and a liquid cooling plate used for adjusting the temperature of the battery cell stack; the liquid cooling interface is located on the side wall of the battery case and is communicated with water nozzles of the liquid cooling plate by means of the quick-connection liquid cooling pipe located in the battery case; the high-voltage connector is located on the side wall of the battery case; and the high-voltage connector comprises a high-voltage positive electrode and a high-voltage negative electrode, and the high-voltage positive electrode and the high-voltage negative electrode are respectively communicated with a positive electrode and a negative electrode of the battery module by means of the busbar located in the battery case. The space-saving battery box provided by the present invention can be directly stacked layer by layer, and metal battery frames are omitted, so that the space of the battery system is greatly saved.

## Description

### BACKGROUND OF THE INVENTION

### 1. Technical Field

The invention belongs to the technical field of power batteries, and particularly relates to a space-saving battery box and system.

### 2. Description of Related Art

With the gradual acceleration of electrification of construction machines, multiple power boxes are used to provide more power to prolong the operating time and reduce the charging frequency. According to an existing scheme, one or more battery frames which are layered in the height direction are arranged to install battery boxes. Because gaps are reserved between battery boxes on the same layer and each layer of the frame is higher than the battery boxes, the overall size of a battery system (including the battery boxes and the battery frame) is large.

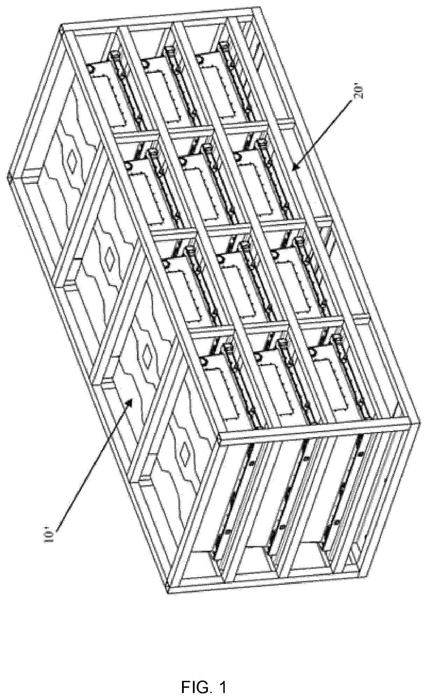

As shown in FIG. 1, in the prior art, steel plates or rectangular steel pipes are assembled and welded together to form a metal battery frame 20' for carrying and fixing battery boxes 10'. The frame is divided into multiple layers in the height direction, the distance between adjacent layers is greater than the sum of the heights of the battery boxes and the rectangular steel pipes, multiple battery boxes 10' are laid on each layer, and appropriate gaps are reserved between the battery boxes on the same layer as well as between the battery boxes and the battery frame.

The space occupied by the battery system (including the battery boxes and the battery frame) in the prior art is equivalent to the maximum outer contour of the battery frame, so the overall size of the battery system is much greater than the sum of the sizes of all the battery boxes.

### BRIEF SUMMARY OF THE INVENTION

To overcome the defects in the prior art, the invention provides a space-saving battery box and system. The battery box can be directly stacked layer by layer, and metal battery frames are omitted, such that the space of the battery system is greatly saved.

To overcome the defects in the prior art, the technical solution provided by the invention is as follows:
A space-saving battery box includes a battery case, liquid cooling interfaces, high-voltage connectors, a battery module, a busbar and a quick-connection liquid cooling pipe;
the battery module is located in the battery case and includes a battery cell stack and a liquid cooling plate used for controlling a temperature of the battery cell stack;
the liquid cooling interfaces are located on a side wall of the battery case and connected to water nozzles of the liquid cooling plate by means of the quick-connection liquid cooling pipe located in the battery case;
the high-voltage connectors are located on the side wall of the battery case and include a high-voltage positive electrode and a high-voltage negative electrode, and the high-voltage positive electrode and the high-voltage negative electrode are respectively connected to a positive electrode and a negative electrode of the battery module by means of the busbar located in the battery case.

Preferably, the battery case includes an upper brim, four walls, a lower brim and a bottom plate;
the upper brim is connected to the four walls and provided with multiple threaded through-holes;
the lower brim is connected to the four walls and the bottom plate, and provided with multiple unthreaded through-holes coaxial with the threaded through-holes;
the liquid cooling interfaces and the high-voltage connectors are located on the four walls.

Preferably, the battery case further includes pillars; upper ends of the pillars are connected to the upper brim, lower ends of the pillars are connected to the lower brim, and inner sides of the pillars are connected to outer sides of the four walls.

Preferably, multiple conical guide pins are arranged on an upper surface of the upper brim, and multiple guide positioning holes coaxial with the conical guide pins are formed in the lower brim.

Preferably, the space-saving battery box further includes a sealing strip, and a sealing strip mounting groove that is used for limiting the sealing strip and has a height smaller than that of the sealing strip is formed in a lower surface of the lower brim.

Preferably, multiple battery modules are received in the battery case and isolated from each other by means of module isolation beams, and bottom ends of the module isolation beams are fixed to a bottom plate of the battery case.

Preferably, the space-saving battery box further includes a slave plate support, a sampling slave plate and a low-voltage connector;
the slave plate support is located in the battery case and connected to the battery case;
the sampling slave plate is located in the battery case, connected to the slave plate support, in communication connection with the low-voltage connector and used for measuring a voltage and temperature of the battery module;
the low-voltage connector is connected to the side wall of the battery case.

Preferably, the space-saving battery box further includes explosion-proof valves arranged on the side wall of the battery case.

Preferably, the space-saving battery box further includes a manual service disconnect switch arranged on the side wall of the battery case and connected in series to the busbar.

A space-saving battery system includes the space-saving battery box.

Preferably, after being stacked layer and layer, multiple space-saving battery boxes are connected by means of screws penetrating through the battery cases.

The invention has the following beneficial effects:
In the invention, metal battery frames are omitted directly, the battery case that can be directly stacked layer and layer or arranged side by side is designed, and the strength of the battery case satisfies the strength requirement of stacking layer by layer, such that the battery case fulfills the support effect of the original metal battery frames. Therefore, under the same quantity of electricity, the space is greatly saved, more space is provided for the configuration of other parts of a main engine, and the main engine can operate more conveniently in a narrow space such as in a tunnel.

In the invention, multiple battery modules are placed in the battery case side by side, and multiple small battery boxes are combined into a large battery box, and gaps between side beams of the small battery boxes as well as between the small battery boxes are avoided, such that the width of the battery system is further reduced.

In the invention, the number of devices such as the liquid cooling interfaces, the high-voltage connectors, the manual service disconnect switch, the low-voltage connector and the busbar is greatly reduced or simplified, such that the material cost of the battery box is reduced; in addition, under the same quantity of electricity, the number of battery boxes is greatly reduced, and the number of high and low-voltage wire harnesses and liquid cooling pipes between the battery boxes and the assembly work are reduced accordingly, such that the assembly efficiency of the whole battery system on a main engine is improved.

### BRIEF DESCRIPTION OF THE SEVERAL VIEWS OF THE DRAWINGS

FIG. 1 is a schematic diagram of a battery system in the prior art;
FIG. 2 is a schematic diagram of a battery box in the prior art;
FIG. 3 is a schematic diagram of a space-saving battery box according to Embodiment 1;
FIG. 4 is an exploded view of the space-saving battery box according to Embodiment 1;
FIG. 5 is a schematic diagram of a battery case according to Embodiment 1;
FIG. 6 is a schematic diagram of side wall recesses in the battery case according to Embodiment 1;
FIG. 7 is an enlarged view of part A in FIG. 5;
FIG. 8 is a schematic diagram of the bottom of the battery case according to Embodiment 1;
FIG. 9 is a schematic diagram of a battery module according to Embodiment 1;
FIG. 10 is an exploded view of a liquid cooling plate according to Embodiment 1;
FIG. 11 is a diagram of the flow direction of cooling liquid in the liquid cooling plate according to Embodiment 1;
FIG. 12 is a schematic diagram of a space-saving battery system according to Embodiment 2;
FIG. 13 is an exploded view of the space-saving battery system according to Embodiment 2;
wherein,
10', battery box; 20', metal battery frame; 101', module; 102', tray; 1021', side beam;
1, space-saving battery box; 11, battery case; 111, upper brim; 1111, conical guide pin; 1112, threaded through-hole; 1113, lifting ring mounting threaded-hole; 112, four walls; 1121, mounting panel; 1122, side wall recess; 113, pillar; 1131, side pillar; 1132, reinforcing pillar; 114, lower brim; 1141, guide positioning hole; 1142, unthreaded through-hole; 1143, sealing strip mounting groove; 116, bottom plate; 1161, bottom plate recess; 1162, isolation beam threaded-hole; 1163, support threaded-hole;
12, cooling liquid interface; 13, high-voltage connector; 14, explosion-proof valve; 15, manual service disconnect switch; 16, low-volage connector;
17, battery module; 171, liquid cooling plate; 1711, plate A; 1712, plate B; 1713, water nozzle; 172, battery cell stack; 173 and 176, high-voltage electrode; 174, connecting piece; 175, connecting piece support;
18, module isolation beam; 19, slave plate support; 20, sampling slave plate; 21, busbar; 22, quick-connection liquid cooling pipe; 23, sealing strip; 2, screw.

### DETAILED DESCRIPTION OF THE INVENTION

The invention is further described below in conjunction with embodiments. The following embodiments are merely used for more clearly explaining the technical solutions of the invention rather than limiting the protection scope of the invention.

In the description of the invention, unless otherwise expressly stated and defined, terms "link", "connect" and "fix" should be broadly understood. For example, "connect" may refer to fixed connection, detachable connection or integrated connection; mechanical connection or electrical connection; direct connection, indirect connection by means of an intermediate medium, or internal connection or interaction of two elements. Those ordinarily skilled in the art can appreciate the specific meanings of these terms in the invention as the case may be.

In the invention, unless otherwise expressly stated and defined, when a first feature is referred to as being located "on" or "under" a second feature, the first feature and the second feature may be in direct contact with each other, or the first feature and the second feature may be in contact with each other by means of another feature therebetween rather than being in direct contact with each other. In addition, when a first feature is referred to as being located "above" or "over" a second feature, it indicates that the first feature is located right above or obliquely above the second feature, or it merely indicates that the horizontal altitude of the first feature is greater than that of the second feature. When a first feature is referred to as being located "below" or "underneath" a second feature, it indicates that the first feature is located right below or obliquely below the second feature, or it merely indicates that the horizontal altitude of the first feature is smaller than that of the second feature.

In the description of the embodiments, terms such as "upper", "lower", "left" and "right" are used to indicate directional or positional relations based on the accompanying drawings merely for the purpose of facilitating and simplifying operations, do not indicate or imply that devices or elements referred to must be in a specific direction or be configured and operated in a specific direction, and thus should not be construed as limitations of the invention. In addition, terms "first" and "second" are merely used for the purpose of distinguishing in description and do not have special meanings.

### Embodiment 1

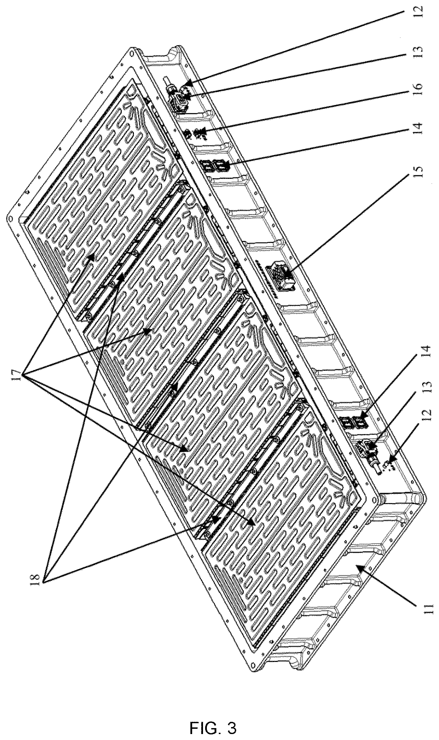

This embodiment provides a space-saving battery box. Referring to FIGS. 3, 4, 9 and 10, the space-saving battery box includes a battery case 11, two liquid cooling interfaces 12 (one of the two liquid cooling interfaces 12 is an inlet and the other liquid cooling interface 12 is an outlet), high-voltage connectors 13, a battery module 17, a busbar 21 and a quick-connection liquid cooling pipe 22; the battery module 17 is located in the battery case 11 and includes a battery cell stack 172 and a liquid cooling plate 171 for controlling the temperature of the battery cell stack 172; the liquid cooling interfaces 12 are located on a side wall of the battery case 11 and connected to water nozzles 1713 of the liquid cooling plate 171 by means of the quick-connection liquid cooling pipe 22 located in the battery case 11; the high-voltage connectors 13 are also located on the side wall of the battery case 11 and include a high-voltage positive electrode and a high-voltage negative electrode, and the high-voltage positive electrode and the high-voltage negative electrode are respectively connected to a positive electrode and a negative electrode of the battery module 17 by means of the busbar 21 located in the battery case 11.

In the invention, metal battery frames are omitted directly, the battery case that can be directly stacked layer and layer or arranged side by side is designed, components such as the battery module and the busbar are arranged in the battery case, and the strength of the battery case satisfies the strength requirement of stacking layer by layer, such that the battery case fulfills the support effect of the original metal battery frames. Therefore, under the same quantity of electricity, the space is greatly saved, more space is provided for the configuration of other parts of a main engine, and the main engine can operate more conveniently in a narrow space such as in a tunnel.

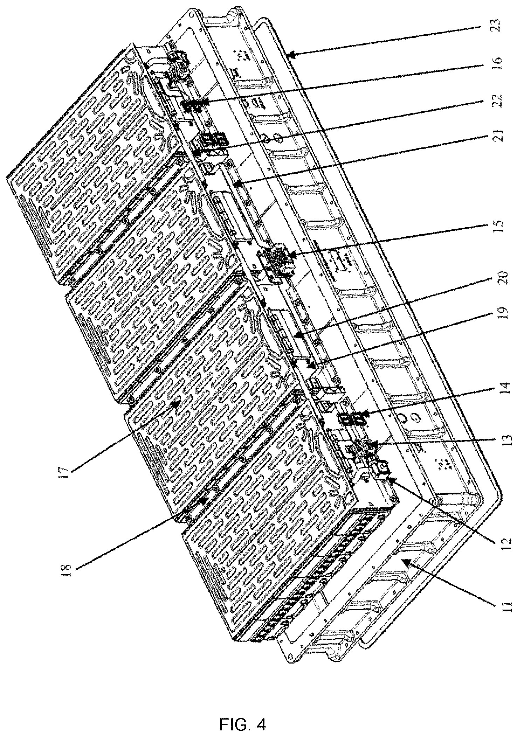

Referring to FIGS. 3 and 4, the space-saving battery box further includes a slave plate support 19, a sampling slave plate 20, a low-voltage connector 16, explosion-proof valves 14 arranged on the side wall of the battery case 11, and a manual service disconnect switch 15 arranged on the side wall of the battery case 11 and connected in series to the busbar 21. The slave plate support 19 is located in the battery case 11 and connected to the battery case 11; the sampling slave plate 20 is located in the battery case 11, fixed to the slave plate support 19, in communication connection with the low-voltage connector 16, and used for measuring the voltage and temperature of the battery module 17 and transmitting the voltage and temperature of the battery module 17; the low-voltage connector 16 is fixed to the side wall of the battery case 11. An appropriate gap is reserved between the slave plate support 19 and the battery module 17 and works together with the side wall of the battery case 11 to restrain the expansion of the battery module 17 in the length direction. When a battery is in a normal state, the explosion-proof valves 14 keep the pressure inside the battery case 11 and the pressure outside the battery case 11 in balance to some extent. When the pressure inside the battery case 11 rises sharply due to an exception of the battery, gas will be quickly discharged out of the battery case 11 by means of the explosion-proof valves 14 to prevent an excessively high pressure in the battery case 11, thus avoiding an accident. On one hand, the manual service disconnect switch 15 is used to disconnect a high-voltage circuit when maintenance is performed by an operator; on the other hand, a fuse in the manual service disconnect switch 15 may disconnect the high-voltage circuit by fusion in case of a large-current exception such as a short circuit. The low-voltage connector 16 is used for transmitting the voltage, temperature and other signals collected by the sampling slave plate 20 to an external controller.

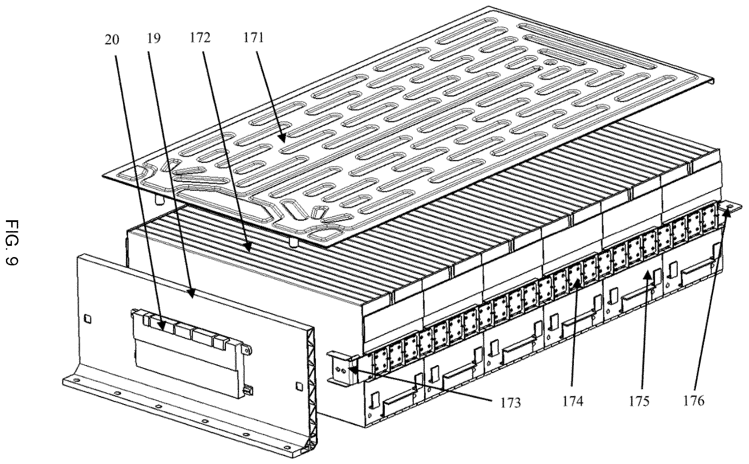

Specifically, referring to FIG. 9, the battery cell stack 172 is formed by a certain quantity of battery cells that are stacked together, and the battery cells are fixed to a bottom plate of the battery case 11 by gluing. The liquid cooling plate 171 is located above the battery cell stack 172 and adhered to the battery cell stack 172 with a thermally conductive adhesive, heat of the battery cell stack 172 is transferred to the liquid cooling plate 171 by means of the thermally conductive adhesive and then taken away by cooling liquid in the liquid cooling plate 171. Connecting piece supports 175 are arranged on two sides of the battery module 17 and made from an insulating material, limiting structures are arranged on the connecting piece supports 175 and used for clamping connecting pieces 174, the connecting pieces are used for electrically connecting positive and negative terminals of adjacent battery cells, the battery cells at the two ends of the battery module respectively output high-voltage electrodes 173 and 176 (one of the high-voltage electrodes 173 is positive and the other high-voltage electrodes 173 is negative), and the high-voltage electrodes 173 and 176 are connected to the high-voltage connectors 13 by means of the busbar 21.

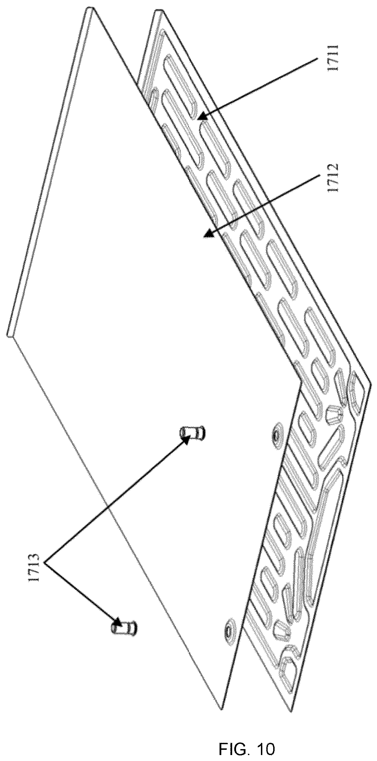

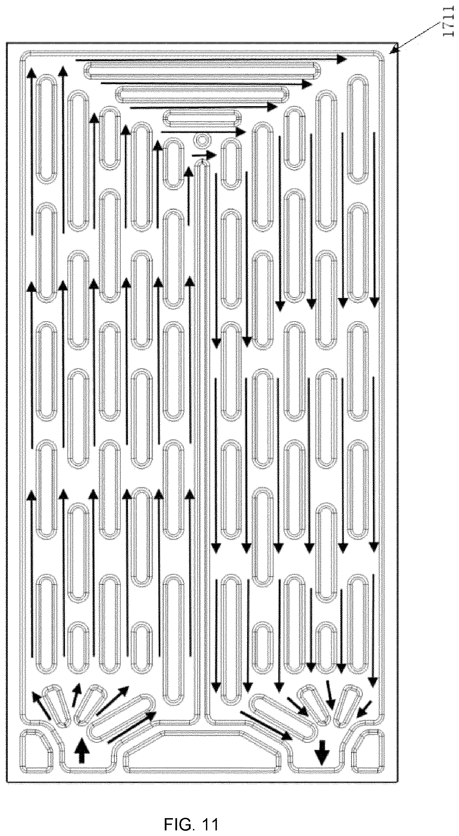

As shown in FIGS. 10 and 11, the liquid cooling plate 171 is formed by a plate A 1711, a plate B 1712 and a water nozzle 1713. The plate A 1711 is formed by stamping or blow molding and provided with protrusions and a groove, upper surfaces of all the protrusions are flush, the plate A 1711 is closely attached to one side of the plate B 1712 by welding or gluing, a cavity is defined by the groove of the plate A 1711 and the plate B 1712, and the protrusions form islands, such that the structural strength of the liquid cooling plate 171 may be improved, and the flow rate and velocity of cooling liquid in the cavity may be changed to make the temperature distribution of the battery module 17 more uniform. The other side, not attached to the plate A 1711, of the plate B 1712 is attached to an upper surface of the battery cell stack 172 with a thermally conductive adhesive, and the water nozzles 1713 are welded to the side, attached to the upper surface of the battery cell stack 172, of the plate B 1712. After the plate A 1711 and the plate B 1712 are attached together, a bent portion is arranged at the tail; when the liquid cooling plate 171 is mounted, the bent portion hooks a tail surface of the battery cell stack 172 to position the liquid cooling plate 171. The cooling liquid enters the cavity from the water nozzle 1713 on one side of the plate A 1711, is diverged into multiple passages by the protrusions, then turns at the tail of the plate A 1711, and finally flows out from the water nozzle 1713 on the other side.

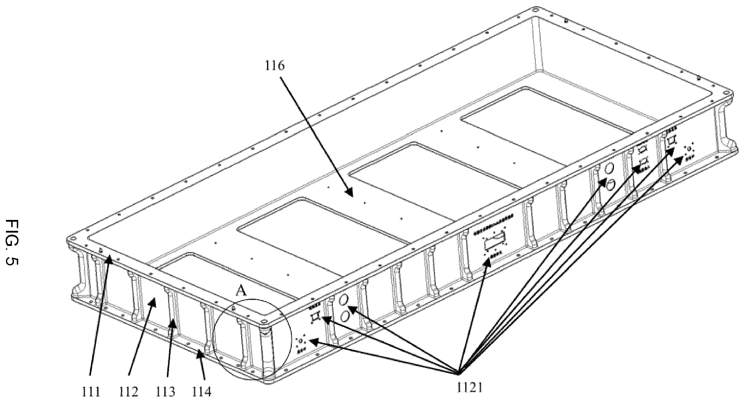

Optionally, referring to FIG. 5, the battery case 11 is configured as a box structure with an opening at the top, is integrally formed by casting, and includes an upper brim 111, four walls 112, a lower brim 114 and a bottom plate 116; the upper brim 111 is connected to the four walls 112 and provided with multiple threaded through-holes 1112; the lower brim 114 is connected to the bottom plate 116 and the four walls 112, and provided with multiple unthreaded through-holes 1142 that are coaxial with the threaded through-holes 1112 and in one-to-one correspondence with the threaded through-holes 1112. The liquid cooling interfaces 12, the explosion-proof valves 14, the manual service disconnect switch 15, the low-voltage connector 16 and the high-voltage connectors 13 are located on the four walls 112. In use, after the space-saving battery boxes are stacked, the battery cases 11 on upper and lower layers are fixed by means of screws penetrating through the threaded through-holes 1112 and the unthreaded through-holes 1142. The battery cases 11 on the bottom layer may be fixed to a vehicle by means of screws penetrating through the unthreaded through-holes 1142.

Because the space-saving battery boxes 1 can be directly and closely stacked layer by layer, the space-saving battery boxes on an upper layer may be used as sealing covers of the space-saving battery boxes on a lower layer, a top cover just needs to be added to the space-saving battery boxes on a top layer, and it is unnecessary to design an independent top cover for the battery case 11. By omitting the top cover, the total height of a battery system may be further reduced.

The material of the battery case 11 is not limited as long as the strength requirement is satisfied. In a case where the battery case 11 is made from metal, the battery case 11 needs to be coated with a coating to realize insulation, corrosion resistance and other purposes.

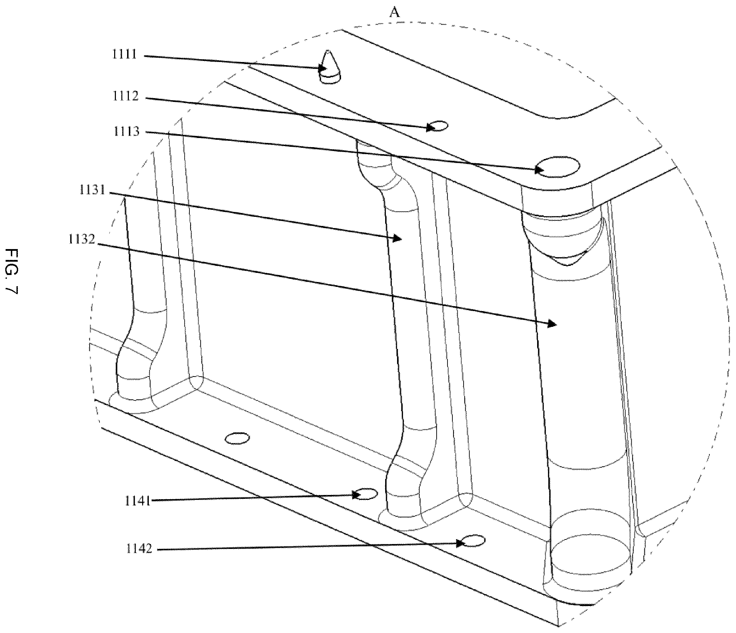

Preferably, referring to FIGS. 5 and 7, the battery case 11 further includes pillars 113, wherein upper ends of the pillars 113 are connected to the upper brim 111, lower ends of the pillars 113 are connected to the lower brim 114, and side faces of the pillars 113 are connected to outer sides of the four walls 112. The pillars 113 are used to improve the strength of the whole battery case 11 and include side pillars 1131 located on the four walls and reinforcing pillars 1132 located at four corners. Lifting ring mounting threaded-holes 1113 are formed in the upper brim 111 above the reinforcing pillars 1132, lifting ring mounting holes matched with the lifting ring mounting threaded-holes 1113 are formed in the lower brim 114 below the reinforcing pillars 1132, and the lifting ring mounting threaded-holes 1113 and the lifting ring mounting holes are connected by means of lifting rings. The diameter of the lifting ring mounting threaded-holes 1113 is greater than that of the threaded through-holes 1112, and correspondingly, the diameter of the reinforcing pillars 1132 at the four corners is greater than that of the side pillars 1131. Force applied to the upper brim 111 is transferred to the four walls 112 and the lower brim 114 by means of the pillars 113, such that the bearing capacity of the upper brim 111 is improved to support the battery case 11 above.

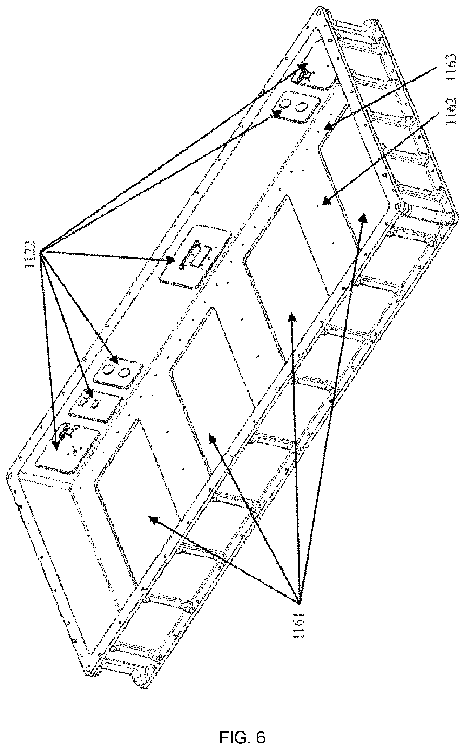

Preferably, referring to FIGS. 5 and 6, multiple side wall recesses 1122 are formed in one of the four walls 112 of the battery case 11, and bottom plate recesses 1161 are formed in the bottom plate 116. Mounting panels 1121 are mounted in the side wall recesses 1122 and used for mounting the high-voltage connectors 13, the low-voltage connector 16, the liquid cooling interfaces 12, the explosion-proof valves 14, the manual service disconnect switch 15 and other components. Support threaded-holes 1163 are formed in the bottom plate 116 and used for fixing the slave plate support 19. The bottom plate recesses and the side wall recesses may be formed by cutting after casting or may be formed by casting through-notches and then welding thin plates. For the casting process, considering the fluidity of liquid metal and the reduction of the weight of rough castings, the second manufacturing scheme is recommended.

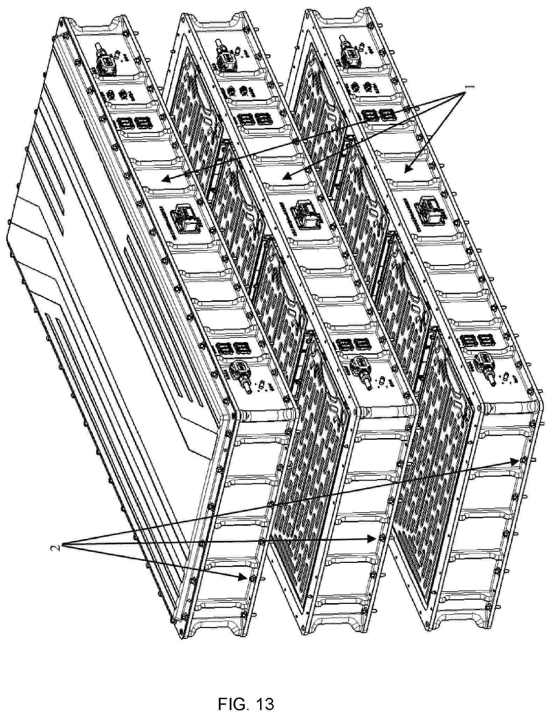

To facilitate the alignment of the space-saving battery boxes on an upper layer and a lower layer, referring to FIGS. 7 and 13, multiple conical guide pins 1111 are arranged on an upper surface of the upper brim 111 of the battery case 11, and multiple guide positioning holes 1141 that are coaxial with the conical guide pins 1111 and in one-to-one correspondence with the conical guide pins 1111 are formed in the lower brim 114. When the space-saving battery boxes on an upper layer are stacked on the space-saving battery boxes on a lower layer, the guide positioning holes 1141 of the space-saving battery boxes on the upper layer are aligned with the conical guide pins 1111 of the space-saving battery boxes on the lower layer and then slide downwards along the conical guide pins 1111 until the lower surfaces of the lower brims 114 of the space-saving battery box on the upper layer come in contact with the upper surfaces of the upper brims 111 of the space-saving battery boxes on the lower layer. Under the positioning effect of the guide positioning holes 1141 and the conical guide pins 1111, axes of the unthreaded through-holes 1142 of the space-saving battery boxes on the upper layer and axes of the threaded through-holes 1112 of the space-saving battery boxes on the lower layer fall within a reasonable tolerance range. Finally, screws 2 penetrate through the unthreaded through-holes 1142 of the space-saving battery boxes on the upper layer and are screwed into the threaded through-holes 1112 to fixedly connect the space-saving battery boxes on the upper layer and the lower layer.

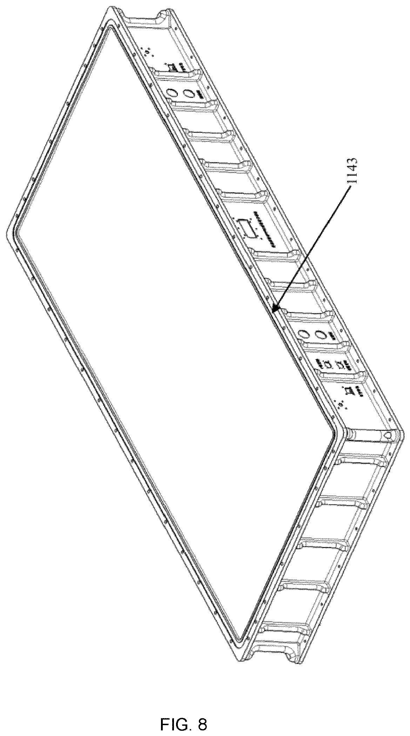

To guarantee the sealing performance between the space-saving battery boxes on an upper layer and a lower layer, referring to FIGS. 4 and 8, the space-saving battery box further includes a sealing strip 23, and a sealing strip mounting groove 1143 that is used for limiting the sealing strip 23 and has a height smaller than that of the sealing strip 23 is formed in a lower surface of the lower brim 114. When the space-saving battery boxes 11 are stacked together, the sealing strip 23 comes into contact with the upper brim 111 of the battery case 11 below and is then compressed until the height of the sealing strip 23 is equal to the depth of the sealing strip mounting groove 1143, such that the contact surface of the stacked battery cases 11 is sealed.

To further save space, referring to FIGS. 3, 4 and 6, multiple battery modules 17 are received in the battery case 11 and are isolated from each other by module isolation beams 18. The module isolation beams 18 are insulators. Non-through isolation beam threaded-holes 1162 are formed in the bottom plate 116 to fix the module isolation beams 18.

In the invention, multiple battery modules 17 are placed in the battery case 11 side by side. Different battery modules 17 are isolated by the module isolation beams 18 to prevent electric contact between adjacent battery modules 17. The liquid cooling interfaces 12 connect the water nozzles 1713 of multiple liquid cooling plates 171 by means of the quick-connection liquid cooling pipe 22 located in the battery case 11. Therefore, only two liquid cooling interfaces 12 (one inlet and one outlet) need to be arranged on two sides of the side wall of the battery case shell 11 to satisfy requirements, such that the number of the liquid cooling interfaces is reduced. In the battery case 11, the high voltage electrodes 173 and 176 of the battery module 17 are connected by means of the busbar 21 and then connected to the high-voltage connectors 13. Therefore, only two high-voltage connectors 13 (one high-voltage positive electrode and one high-voltage negative electrode) need to be arranged on the two sides of the side wall of the battery case 11 to satisfy requirements, such that the number of the high-voltage connectors 13 is reduced.

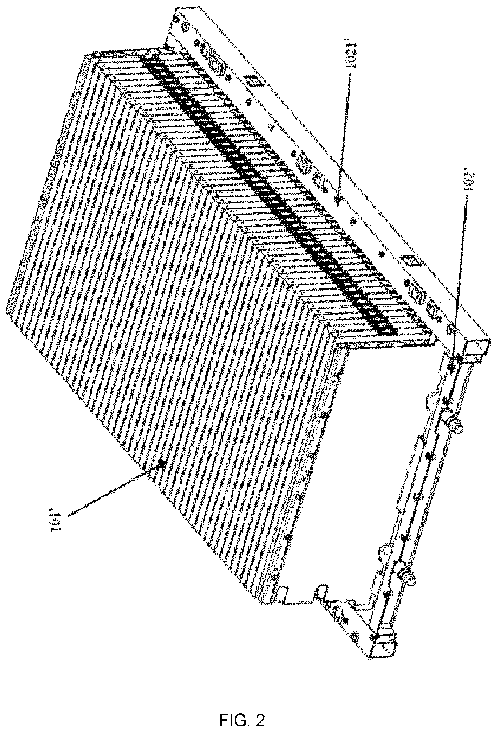

As shown in FIG. 2, in the prior art, a battery box 10' includes a tray 102', a plurality of modules 101' formed by battery cells that are stacked together, and other parts; the module 101' is located in a central area of the tray 102', the area of a horizontal projection of the tray 102' is greater than the sum of the areas of projections of all the modules 101', and particularly, side beams 1021' where battery box fixing points are arranged occupy a large proportion of the area of the horizontal projection. In addition, for each battery box, tray side beams also account for a large proportion of the area of the horizontal projection, leading to a low space utilization rate.

In the invention, existing battery modules are adopted. Multiple battery modules 17 are placed in the battery case 11 side by side, the side beams 1021' in the prior art are omitted and replaced with the module isolation beams 18 with a smaller width, such that the space of a whole battery system in the width direction may be further saved.

In addition, because multiple battery modules 17 are placed in the battery case 11 side by side, and the number of devices such as the explosion-proof valves 14, the manual service disconnect switch 15, the low-voltage connector 16 and the busbar 21 is greatly reduced or simplified, such that the material cost is reduced. Moreover, under the same quantity of electricity, the number of battery boxes is greatly reduced, and the number of high and low-voltage wire harnesses and liquid cooling pipes between the battery boxes and the assembly work are reduced accordingly, such that the assembly efficiency of the whole battery system on a main engine is improved.

### Embodiment 2

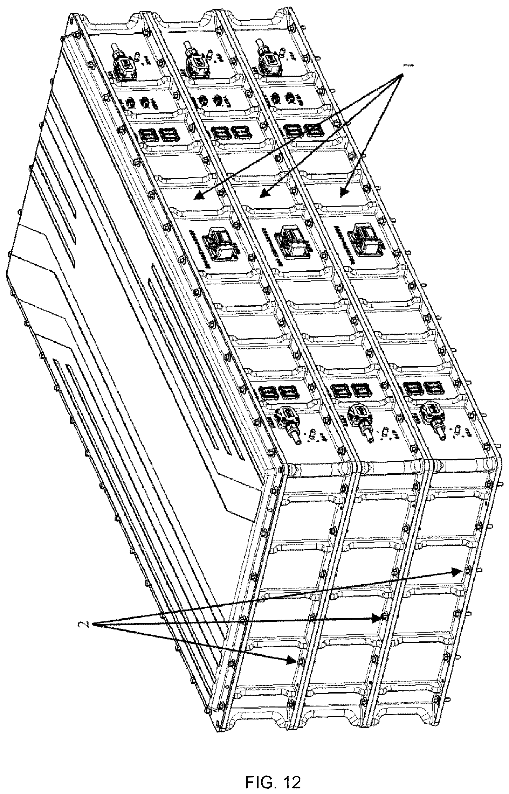

This embodiment provides a space-saving battery system. Referring to FIGS. 12 and 13, the space-saving battery system includes the space-saving battery box 1 described above.

Specifically, multiple space-saving battery boxes 1 are stacked layer by layer and connected by means of screws 2 penetrating through the battery cases 11. Of course, after being stacked layer by layer, the space-saving battery boxes 1 may be fixed easily in other ways, for example, by means of clip springs.

Because the space-saving battery boxes 1 can be directly and closely stacked layer by layer, the space-saving battery boxes on an upper layer may be used as sealing covers of the space-saving battery boxes on a lower layer, and a top cover just needs to be added to the space-saving battery boxes on a top layer. By omitting an independent top cover of the battery case, the total height of the battery system may be further reduced.

FIG. 12 and FIG. 13 are schematic diagrams of the space-saving battery boxes 1 that are directly stacked layer by layer. Of course, the space-saving battery boxes 1 may be horizontally arranged side by side and then stacked layer by layer.

In the invention, the thickness of the bottom plate 116 is 5-20 mm, and the width of the upper brim 111 is about 75 mm. A safe distance of several millimeters is reserved between an upper end of the liquid cooling plate and the upper brim 111 of the battery case and is close to the gap between a top cover used in the prior art and the liquid cooling plate.

With the structure shown in FIG. 1 as an example, the height of the battery box 10' is 240 mm, the height of a metal frame 20' between upper and lower battery boxes is 40 mm, gaps between the battery boxes 10' and the metal frames 20' are 20 mm, and considering that a space for fixing needs to be reserved at the bottom of the metal frames 20', the total height of three layers of battery boxes is 120 mm (the space for fixing at the bottom of the frame)+3*(240+20+40)=1020 mm.

With the structure shown in FIG. 1 as an example, the width of the battery module 101' is 520 mm, gaps between the battery module 101' and the side beams 1021' are 10 mm, and the width of the side beams 1021' is 45 mm, so the total width of one battery box 10' is 520+2*10+2*45=630 mm. The distance between the battery boxes 10' adjacent to each other in the left-right direction is 60 mm, the width of rectangular pipes on two sides of the metal frame 20' is 40 mm, and the distance between the leftmost and rightmost battery boxes 10' and the metal frames 20' is 20 mm, so the length of a single layer of the frame is 4*630+3*60+2*(40+20)=2820 mm.

In the invention, the total thickness of three layers of space-saving battery boxes 1, that are assembled together, is equal to the sum of the heights of three space-saving battery boxes and the height of one top cover. Because only the thickness of the bottom plate 116 of the battery case 11 (the thickness of the bottom plate 116 is 5-20 mm) is added in the height direction, the total height of the three layers of space-saving battery boxes 1, that are assembled together, may be reduced to 800 mm, and a space of 220 mm is saved in the height direction.

In the invention, with the structure shown in FIG. 13 as an example, gaps between the battery modules 17 and the module isolation beams 18 are 10 mm, gaps between the battery modules 17 and the battery case 11 are 10 mm, the width of each battery module 17 is 520 mm, and the width of each module isolation beam 18 is 30 mm, so the total width of a single battery module in the battery case 11 is 520+10+10+30/2=555 mm (the battery module close to the battery case) or 520+10+10+30=570 mm (the battery module located in the middle of the battery case). By adopting the structure shown in FIG. 3, the total length of the battery box is 4*520+3*30+8*10+75*2=2400 mm, and a space of 420 mm is saved in the width direction.

It can be known, by comparison, that the technical solution adopted by the invention can greatly reduce the total width and height of the battery system and has obvious advantages for construction machines requiring a large number oof battery modules.

The above embodiments are merely preferred ones of the invention. It should be noted that those ordinarily skilled in the art can make some improvements and transformations without departing from the technical principle of the invention, and all these improvements and transformations should also fall within the protection scope of the invention.

## Claims

1. A space-saving battery box, comprising a battery case (11), liquid cooling interfaces (12), high-voltage connectors (13), a battery module (17), a busbar (21) and a quick-connection liquid cooling pipe (22), wherein:
the battery module (17) is located in the battery case (11) and comprises a battery cell stack (172) and a liquid cooling plate (171) used for controlling a temperature of the battery cell stack (172);
the liquid cooling interfaces (12) are located on a side wall of the battery case (11) and connected to water nozzles (1713) of the liquid cooling plate (171) by means of the quick-connection liquid cooling pipe (22) located in the battery case (11);
the high-voltage connectors (13) are located on the side wall of the battery case (11) and comprise a high-voltage positive electrode and a high-voltage negative electrode, and the high-voltage positive electrode and the high-voltage negative electrode are respectively connected to a positive electrode and a negative electrode of the battery module (17) by means of the busbar (21) located in the battery case (11).

2. The space-saving battery box according to Claim 1, wherein the battery case (11) comprises an upper brim (111), four walls (112), a lower brim (114) and a bottom plate (116);
the upper brim (111) is connected to the four walls (112) and provided with multiple threaded through-holes (1112);
the lower brim (114) is connected to the four walls (112) and the bottom plate (116), and provided with multiple unthreaded through-holes (1142) coaxial with the threaded through-holes (1112);
the liquid cooling interfaces (12) and the high-voltage connectors (13) are located on the four walls (112).

3. The space-saving battery box according to Claim 2, wherein the battery case (11) further comprises pillars (113); upper ends of the pillars (113) are connected to the upper brim (111), lower ends of the pillars (113) are connected to the lower brim (114), and inner sides of the pillars (113) are connected to outer sides of the four walls (112).

4. The space-saving battery box according to Claim 2, wherein multiple conical guide pins (1111) are arranged on an upper surface of the upper brim (111), and multiple guide positioning holes (1141) coaxial with the conical guide pins (1111) are formed in the lower brim (114).

5. The space-saving battery box according to Claim 2, further comprising a sealing strip (23), wherein a sealing strip mounting groove (1143) that is used for limiting the sealing strip (23) and has a height smaller than that of the sealing strip (23) is formed in a lower surface of the lower brim (114).

6. The space-saving battery box according to Claim 1, wherein multiple said battery modules (17) are received in the battery case (11) and isolated from each other by means of module isolation beams (18), and bottom ends of the module isolation beams (18) are fixed to a bottom plate (116) of the battery case (11).

7. The space-saving battery box according to Claim 1, further comprising a slave plate support (19), a sampling slave plate (20) and a low-voltage connector (16), wherein:
the slave plate support (19) is located in the battery case (11) and connected to the battery case (11);
the sampling slave plate (20) is located in the battery case (11), connected to the slave plate support (19), in communication connection with the low-voltage connector (16) and used for measuring a voltage and temperature of the battery module (17);
the low-voltage connector (16) is connected to the side wall of the battery case (11).

8. The space-saving battery box according to Claim 1, further comprising explosion-proof valves (14) arranged on the side wall of the battery case (11):

9. The space-saving battery box according to Claim 1, further comprising a manual service disconnect switch (15) arranged on the side wall of the battery case (11) and connected in series to the busbar (21).

10. A space-saving battery system, comprising the space-saving battery box (1) according to any one of Claims 1-9.

11. The space-saving battery system according to Claim 10, wherein after being stacked layer and layer, multiple said space-saving battery boxes (1) are connected by means of screws (2) penetrating through the battery cases (11).
